# EUROPÄISCHE PATENTSCHRIFT

(11) **EP 2 060 959 B1**
(45) Veröffentlichungstag und Bekanntmachung des Hinweises auf die Patenterteilung: **22.01.2020**
(21) Anmeldenummer: 08163938.7
(22) Anmeldetag: 09.09.2008
(51) Int. Cl.: G04D 1/00, B23P 19/00, B65G 17/22

(54) **Montagevorrichtung für die Montage von Baugruppen, insbesondere Uhrwerke**
Installation device for installing sets of components, in particular clockwork-movements
Dispositif de montage pour le montage de composants, en particulier des mécanismes d'horlogerie

(30) Priorität: 15.11.2007 DE 102007047795
(43) Veröffentlichungstag der Anmeldung: 20.05.2009
(73) Patentinhaber: FMS Montagetechnik GmbH, 82178 Puchheim (DE)
(72) Erfinder: Dohnalek, Heinz, 82178 Puchheim (DE); Mehltretter, J. Michael, 82178 Puchheim (DE)
(74) Vertreter: TBK

(56) Entgegenhaltungen:
- CH-A- 347 092
- DE-A1- 3 208 102
- FR-A- 668 567

## Beschreibung

Die Erfindung betrifft eine Montagevorrichtung für die Montage von Baugruppen, insbesondere Uhrwerke, gemäß dem Oberbegriff des Patentanspruchs 1.

Trotz zunehmender automatisierter Montage werden eine Vielzahl von Baugruppen manuellen Montageschritten unterworfen. Um diese manuellen Montageschritte zu vereinfachen, wurden Montagevorrichtungen entwickelt, die eine Kassette aufweisen, in der eine Vielzahl von Werkstückträgern vorgesehen sind, die mittels eines Antriebs jeweils in eine Montageposition bewegbar sind. In dieser Montageposition können vom Monteur die erforderlichen Montageschritte ausgeführt werden. Nach Beendigung dieser kann das nächste Werkstück durch den genannten Antrieb in die Montageposition bewegt werden.

Aus dem Stand der Technik sind zahlreiche derartige Montagevorrichtungen bekannt. Bspw. ist aus der schweizerischen Patentschrift Nr. 480 686 eine Montagevorrichtung zur Durchführung von Arbeiten nacheinander an einer Serie gleichartiger Uhrwerke bekannt. Insbesondere für hochwertige komplexe Uhrwerke sind derartige Montagevorrichtungen eine große Erleichterung, da dem Monteur die Werkstücke auf einfache Weise nacheinander zugeführt werden können.

Aus diesem Stand der Technik wie auch aus dem europäischen Patent Nr. 1 046 457 B1 sind derartige Montagevorrichtungen mit einer Art Kassette bekannt, in der eine Vielzahl von Werkstückträgern vorgesehen ist, von denen jeweils der Träger des gerade zu bearbeitenden Werkstücks mittels eines Antriebs in eine Montageposition bewegbar ist.

Dokument FR 668 567 A beschreibt eine Montagevorrichtung für die Montage von Baugruppen, die eine Kassette aufweist und eine Vielzahl von Werkstückträgern umfasst, die mittels eines Antriebs in eine Montageposition bewegbar sind. Die Werkstückträger sind auf einer Lagerplatte angeordnet, die in einer Führung verschieblich geführt sind und bei Erreichen der Montageposition verschwenkt werden.

Aus dem Dokument DE 32 08 102 A1 ist ein kurvengängiges Montageband bekannt, bei dem abwechselnd Montageplattformen mit vier Rädern und Montageplattformen mit drei Rädern in geringem Abstand zum Einsatz kommen. Durch geschicktes Absenken der Führungskanäle für die Plattformräder ist ein Verschwenken der Plattform in einer 180°-Kurve so möglich, dass es nicht zu einer Berührung der Wägen kommt obwohl diese einen geringen Abstand aufweisen. Dadurch, dass die Wägen auf verschiedenen Höhenniveaus laufen, können Teile der benachbarten Plattformen ineinander verschwenkt werden.

Dokument CH 347 092 A beschreibt eine Bearbeitungsmaschine, die eine Montagevorrichtung aufweist, in der Werkstückträger auf Plattformwägen angeordnet sind und diese Bereiche einer Montageposition verschwenkt werden.

Aufgabe der Erfindung ist es, eine gattungsgemäße Montagevorrichtung für die Montage von Baugruppen zu schaffen, die es erlaubt, bei kompakter Bauweise das gerade zur Montage vorgesehene Werkstück auf eine einfache Weise zuverlässig in eine exponierte und definierte Montageposition zu bringen, die eine gute Zugänglichkeit für den Monteur gewährleistet.

Diese Aufgabe wird durch die Merkmale des Patentanspruchs 1 gelöst.

Der zunächst bestehende Widerspruch, dass einerseits die Kassette mit den Werkstückträgern möglichst kompakt ausgeführt werden soll und somit die Werkstückträger zwangsläufig nahe aneinander liegen müssen und andererseits eine exponierte Position mit guter Zugänglichkeit des zu montierenden Werkstücks gewährleistet werden soll, wird beim Anmeldungsgegenstand dadurch gelöst, dass die Werkstückträger auf Lagerplatten angeordnet sind, die beim Transport in die Montageposition verschwenkt werden. Diese Verschwenkbewegung ist einfach herbeizuführen und gewährleistet, dass der auf der Lagerplatte befindliche Werkstückträger in eine exponierte und gut zugängliche Montageposition gebracht wird. Die Lagerplatten werden in zwei Führungselementen, wie Führungsschienen, die bevorzugt als Führungsnuten ausgebildet sind, geführt. Hierzu weisen die Lagerplatten Eingriffsabschnitte auf, die mit diesen Führungsschienen in Eingriff sind. Die erfindungswesentliche Verschwenkbewegung der Lagerplatte ist auf einfache Weise dadurch zu erzielen, dass die Führungsschienen nicht gänzlich parallel verlaufen, sondern im Bereich der Montageposition einen geeigneten nicht parallelen Verlauf annehmen, so dass beim Transport die Lagerplatte, die sich über die Eingriffsabschnitte in Eingriff mit beiden Führungsschienen befindet, automatisch ohne weitere Mechanismen verschwenkt wird.

Um diese gewünschte Bewegung der Lagerplatten bzw. der Werkstückträger zu ermöglichen, wird vorteilhafter Weise eine innere und eine äußere Führungsschiene eingesetzt, die über den gesamten Bereich mit Ausnahme des Bereichs der Montageposition parallel verlaufen, sich jedoch im Bereich der Montageposition annähern und somit die Verschwenkung der Lagerplatte bewirken. Hierbei kann die äußere Führungsschiene im Bereich der Montageposition eine mehr oder weniger stetige Kurve von 180° beschreiben, wohingegen die innere Führungsschiene eine deutlich spitzere Kehre von 180° ausführt. Hierdurch wird die gewünschte Verschwenkbewegung realisiert, was näher anhand des angesprochenen Ausführungsbeispiels erläutert wird.

Optimal sollte die Verschwenkung des Werkstückträgers bzw. der Lagerplatte langsam und kontinuierlich ruckfrei erfolgen. Daher beginnt diese bereits vor Erreichen der Montageposition und wird kontinuierlich bis zum Erreichen der Montageposition fortgesetzt.

Wird eine hochwertige exakte Führung der Lagerplatten realisiert und ein zumindest weitestgehend spielfreier Antrieb eingesetzt, wird der das zu montierende Werkstück tragende Werkstückträger in der Montageposition stabil und weitgehend spielfrei positioniert sein, so dass auch die Montage hochgenauer und diffiziler Werkstücke problemlos möglich ist. Dies kann jedoch auch bei Führungen und/oder Antrieben gewährleistet werden, die ein gewisses Spiel aufweisen, in dem der das zu montierende Werkstück tragende Werkstückträger bzw. die zugeordnete Lagerplatte in der Montageposition durch eine Fixiereinrichtung festgestellt wird. Diese Feststellung kann über eine einfache Klemmung erfolgen, die einen Abschnitt der Lagerplatte oder des Werkstückträgers festklemmt. Diese Klemmung kann manuell oder automatisch durch geeignete Einrichtungen bei Erreichen der Montageposition ausgeführt werden. Es hat sich jedoch gezeigt, dass bei vielen Konstruktionen und Anwendungen eine relativ einfache automatisch aktivierte Fixiereinrichtung ausreichend ist, die lediglich die Lagerplatte oder den Werkstückträger belastet, indem diese eine gewisse Druckkraft auf diesen aufbringt. Hierdurch kann ein evtl. aufgrund der Führung oder des Antriebs vorhandenes Spiel beseitigt werden und der das zu montierende Werkstück tragende Werkstückträger hinreichend festgesetzt werden.

Eine derartige Fixiereinrichtung umfasst ein Druckelement, das bevorzugt mit der Lagerplatte, ggf. aber auch mit dem Werkstückträger in Eingriff kommt und diesen durch die aufgebrachte Druckkraft stabilisiert. Zur Aufbringung der Druckkraft sind unterschiedlichste Einrichtungen denkbar. Hierbei kann einfach eine Druckfeder zum Einsatz kommen oder auch eine pneumatische oder hydraulische Einrichtung. Zweckmäßig kommt das Andruckelement der Fixiereinrichtung mit einem entsprechend ausgestalteten Bereich der Lagerplatte oder des Werkstückträgers in Eingriff, wobei durch einen geeigneten Formschluss eine weitere Erhöhung der Stabilität erreicht werden kann.

Wird dieses Andruckelement lediglich mit einer bestimmten Andruckkraft belastet, steht dieses einem Weitertransport der Vorrichtung nicht im Wege, vielmehr wird dieses bei Betätigung des Antriebs durch Weitertransport der Lagerplatte bzw. des Werkstückträgers zurückgeschoben und steht diesem Weitertransport nicht im Wege.

Die Lagerplatten sind zweckmäßig kettenartig miteinander verbunden, wobei über geeignete Einrichtungen ein bestimmter Verschwenkwinkel zwischen diesen ermöglicht wird. Dies kann auf einfache Weise gemäß einer Kette durch entsprechende Gelenke erfolgen bzw. durch Verbindung der einzelnen Lagerplatten miteinander durch Stifte und Schlitze in Form eines Kreissegments, die ein gewisses Verschwenken gestatten.

Der Antrieb der Lagerplatten erfolgt zweckmäßig über eine Kette oder einen Riemen. Wird ein Riemen eingesetzt, ist ein Zahnriemen mit entsprechendem Formschluss zu bevorzugen. Der Antrieb der Kette oder des Zahnriemens erfolgt zweckmäßig über eine Antriebsscheibe, die grundsätzlich beliebig, jedoch vorteilhaft auf der Unterseite der Kassette vorgesehen ist und mit der Antriebswelle des eigentlichen Antriebs in Eingriff bringbar ist. Die Kraftübertragung erfolgt zweckmäßig über einen Formschluss zwischen Antriebswelle und Antriebsscheibe, wobei grundsätzlich auch eine Kraftübertragung mittels Kraftschluss möglich ist. Erfolgt die Kraftübertragung über einen Formschluss, müssen Antriebsscheibe und Antriebswelle entsprechend gestaltet sein, um eine formschlüssige Verbindung zu ermöglichen.

Vorteilhaft ist der Einsatz eines Montagetisches, der über den eigentlichen Antrieb verfügt und eine nach oben vorstehende Antriebswelle aufweisen kann, auf die die Kassette so aufgesetzt wird, dass die Antriebsscheibe mit der Antriebswelle in Eingriff gelangt. Zweckmäßig erfolgt der Antrieb schrittweise, um zu gewährleisten, dass der nächste Werkstückträger exakt in die gewünschte Montageposition bewegt wird. Die Steuerung des Antriebs kann manuell oder automatisch erfolgen.

Um die Zugänglichkeit des Werkstücks noch zu erhöhen, kann der Werkstückträger ringartig ausgebildet sein, so dass das Werkstück in der exponierten Montagestellung nicht nur von oben und von den Seiten, sondern sogar auch von unten zugänglich ist. Die Gestaltung der Kassette bzw. die Anordnung der Kassette auf einem Montagetisch bzw. die Gestaltung des Montagetisches muss dabei natürlich so erfolgen, dass der Zugang von unten möglich ist. Diese Zugänglichkeit von unten ist nicht nur im Hinblick auf eigentliche Montageschritte wünschenswert, sondern erlaubt auch das Ansetzen verschiedenartiger Messinstrumente.

Wird die Montagevorrichtung mit der genannten Kassette auf einen Montagetisch aufgesetzt, so sollte die Lage dieser über zumindest zwei Fixpunkte exakt festgelegt sein. Als erster Fixpunkt kann dabei die Antriebswelle, die mit der Antriebsscheibe der Vorrichtung in Eingriff kommt, verwendet werden, so dass lediglich ein weiterer Fixpunkt in Form eines Passstifts oder einer Ausnehmung, die einen entsprechenden Formschluss mit der Vorrichtung eingeht, vorgesehen werden muss.

Die Erfindung wird folgend detaillierter anhand eines bevorzugten Ausführungsbeispiels beschrieben.
Fig. 1 zeigt die Montagevorrichtung in der Draufsicht.
Fig. 2 zeigt den um die Montageposition herum befindlichen Teil der Montagevorrichtung in der Draufsicht.
Fig. 3 zeigt im Detail die Bewegung der Werkstückträger in die Montageposition.

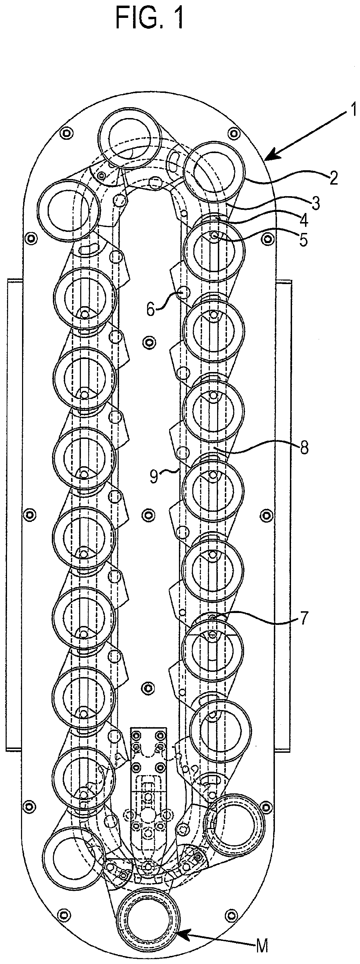

In Fig. 1 ist eine Montagevorrichtung mit einer Kassette zu sehen, die zwanzig Werkstückträger 2 beinhaltet. Die Werkstückträger 2 sind ringförmig gestaltet und auf Lagerplatten 3 angeordnet. Die Lagerplatten 3 sind in Form einer Kette gelenkig miteinander verbunden, wobei diese gelenkige Verbindung über einen Verbindungsstift 5 erfolgt. Weiterhin weist jede Lagerplatte einen kreissegmentartigen Schlitz 4 auf, in dem ein Führungsstift 7 angeordnet ist, der nicht bei jeder gezeigten Lagerplatte dargestellt ist. Dieser Führungsstift 7 läuft in einer äußeren Führungsnut 8 und dient wie ein zweiter Führungsstift 6, der in einer inneren Führungsnut 9 läuft, der Führung der Lagerplatten 3.

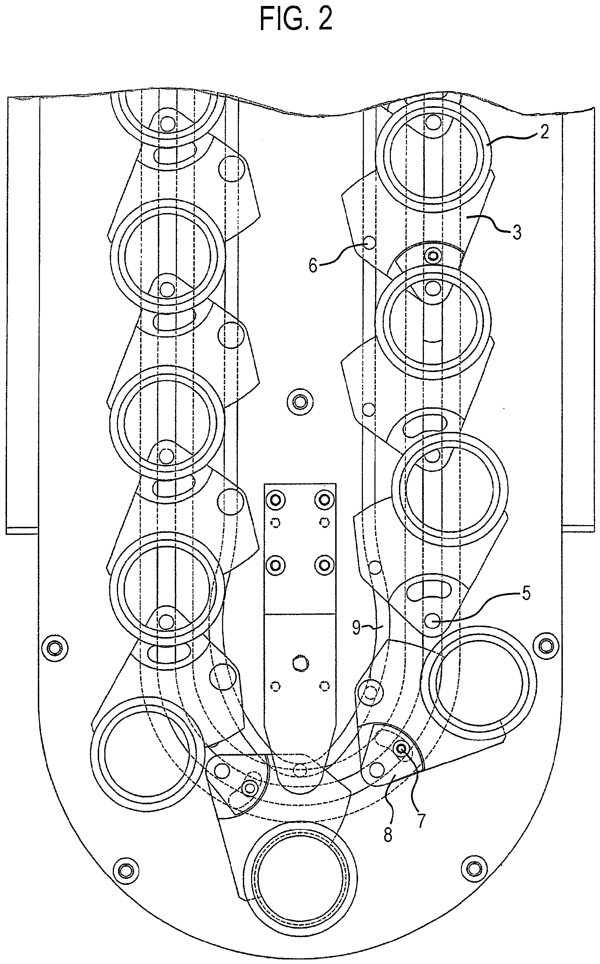

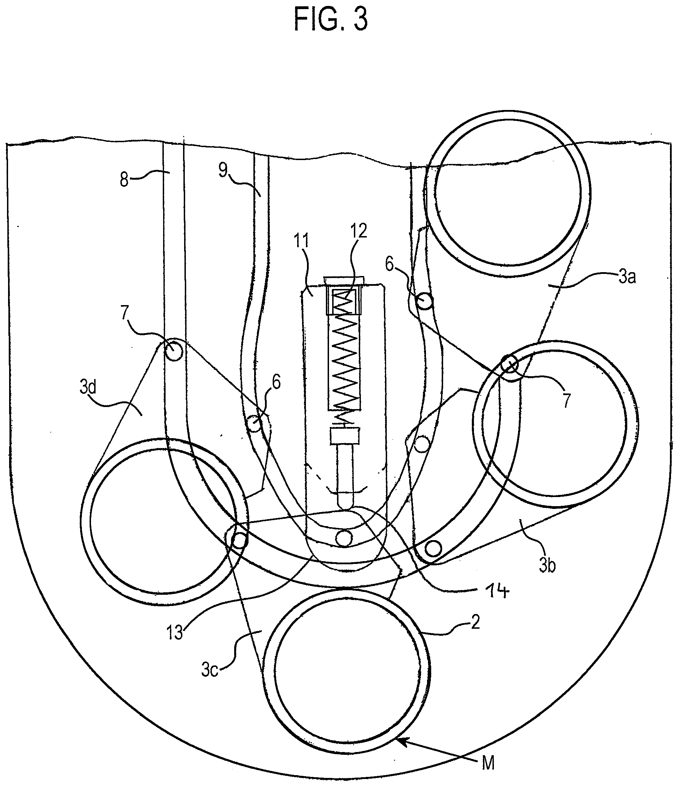

Wie gut aus Fig. 1 zu sehen, sind die Lagerplatten 3 relativ dicht aneinander angeordnet, so dass die Werkstückträger 2 in einer relativ kompakten Kassette 1 aufgenommen werden können. Dennoch wird erreicht, dass in einer Montageposition M, wie auf der Unterseite der Kassette 1 zu ersehen, der Werkstückträger 2 sich in einer exponierten Position befindet, in der dieser nicht nur von oben, sondern auch von den Seiten und von unten gut zugänglich ist, indem der Abstand zum vorauseilenden und nachlaufenden Werkstückträger vergrößert wurde. Dies wird durch ein Ausschwenken der zugeordneten Lagerplatte 3 mit dem Werkstückträger 2 ermöglicht, die näher anhand der Fig. 2 und 3 erläutert werden soll.

Wie bereits gut aus Fig. 2, jedoch besser in Fig. 3 zu sehen, verlaufen die beiden Führungsnuten 8 und 9 im Bereich der Montageposition M nicht parallel, wie im Rest ihres Verlaufs. Vielmehr beschreibt die äußere Führungsnut 8 eine stetige Kurve von 180°, wohingegen die innere Führungsnut 9 bei Annäherung an die Montageposition M ihren Abstand zur äußeren Führungsnut 8 verringert und im Bereich der Montageposition M eine relativ spitze Kehre von 180° beschreibt. Der geringste Abstand der beiden Führungsnuten 8 und 9 besteht im untersten Bereich der in den Fig. 1, 2 und 3 dargestellten Kurven. Dies ist der Bereich, in dem der das zu montierende Werkstück tragenden Werkstückträger 2 die Montageposition M erreicht.

Bei dem konkreten Ausführungsbeispiel erfolgt der Transport der Werkstückträger 2 in Draufsicht rechts herum. Das Verschwenken der Lagerplatten 3 in die gewünschte Montageposition M ist sehr gut aus Fig. 3 zu ersehen, wenn man die Position der Lagerplatten 3a, 3b und der sich in der Montageposition M befindlichen Lagerplatte 3c betrachtet. Durch die beschriebene Anordnung der Führungsnuten 8 und 9 werden die Lagerplatten 3 bei Annäherung an die Montageposition M zunehmend verschwenkt, bis der Werkstückträger 2 seine maximal exponierte Position, die Montageposition M erreicht. Da sich in dieser Position des Werkstückträgers 2 keine weitere Einrichtung oder keine weiteren Bauteile der Vorrichtung unter dem Werkstückträger 2 befinden, vielmehr sich sämtliche notwendigen Einrichtungen, wie die Führungsnuten, Führungseinrichtungen und dgl., in der Zeichenebene oberhalb des Werkstückträgers 2 befinden, ist das im Werkstückträger 2 befindliche Werkstück ohne Probleme auch von unten zugänglich. Bei Weiterbewegung der Lagerplatte 3 bzw. des Werkstückträgers 2 wird dieser, wie anhand der Lagerplatte 3d zu ersehen, wieder in die Normalposition zurück verschwenkt.

Zur zusätzlichen Fixierung des Werkstückträgers 2 bzw. der zugeordneten Lagerplatte 3c in der Montageposition M ist eine Fixiereinrichtung vorgesehen, die über Andruckelemente 11 und 14 verfügt. Mittels einer Druckfeder 12 wird ein Andruckelement 14 mit einer vorbestimmten Druckkraft beaufschlagt. Das Andruckelement 14 drückt mit seinem vorderen Kontaktabschnitt gegen die in der Montageposition M befindliche Lagerplatte 3c. Hierdurch wird ein Spiel in der Zeichenebene der Lagerplatte 3c unterbunden. Weiterhin ist ein zweites Andruckelement 11 vorgesehen, das blattfederartig gestaltet ist und in seinem hinteren Bereich (in der Fig. 3 oberen Bereich) fest fixiert ist und im vorderen Bereich frei angeordnet ist. Dieses zweite Andruckelement 11 überlappt in der Zeichenebene mit der Lagerplatte 3c und drückt diese in einer Ebene senkrecht zur Zeichenebene gegen die Lagerung derselben. Auf diese Weise wird erreicht, dass die Lagerplatte 3 in der Montageposition M vollkommen spielfrei fixiert ist, auch wenn die Führung bzw. die Lagerung der Lagerplatte 3c grundsätzlich ein gewisses Spiel zulässt.

Der Weitertransport der Werkstückträger 2 wird durch die Fixiereinrichtung nicht behindert. Aufgrund der Tatsache, dass zwischen den Andruckelementen 11, 14 und der Lagerplatte 3c lediglich ein Kraftschluss besteht, wird der Weitertransport der Werkstückträger bei Betätigung des Antriebs nicht behindert, sondern lediglich aufgrund der Federkräfte diesem ein gewisser anfänglicher Widerstand entgegengesetzt.

Die Lagerplatten 3 sind über Verbindungselemente mit einer nicht dargestellten Antriebskette verbunden, die in geeigneter Weise von zwei Kettenrädern getragen wird, von denen eines als Antriebsrad im Sinne einer Antriebsscheibe mit der Welle eines Antriebs in Eingriff bringbar ist, um den Transport der Lagerplatten 3 bzw. Werkstückträger 2 zu ermöglichen. Hierzu ist beim beschriebenen Ausführungsbeispiel ein nicht dargestellter Formschluss zwischen einer auf der Oberseite eines Montagetisches vorgesehenen Antriebswelle und dem genannten Kettenrad vorhanden. Die Montagevorrichtung mit der Kassette 1 wird dabei auf dem Montagetisch aufgesetzt, so dass die Antriebswelle mit dem Kettenrad in Eingriff kommt. Über einen weiteren Passstift am Montagetisch, der mit einer nicht gezeigten Ausnehmung der Kassette 1 in Eingriff kommt, wird die Kassette 1 darüber hinaus in ihrer Lage exakt fixiert. Über einen Schrittmotor werden die Lagerplatten 3 und damit die Werkstückträger 2 dann um einen genau definierten Schritt weiter gefördert, der gewährleistet, dass die einzelnen Werkstückträger 2 nacheinander exakt in die Montageposition M bewegt werden.

## Patentansprüche

1. Montagevorrichtung für die Montage von Baugruppen mit einer Kassette (1), die eine Vielzahl von Werkstückträgern (2) umfasst, die mittels eines Antriebs jeweils in eine Montageposition (M) bewegbar sind, wobei
die Werkstückträger (2) auf einer Lagerplatte (3) angeordnet sind, die in einer Führung (8, 9) verschieblich geführt sind, **dadurch gekennzeichnet, dass**
die Führung zwei Führungsnuten (8, 9) aufweist, die jeweils mit einem Eingriffsabschnitt der Lagerplatte (3) in Eingriff sind, wobei
die Führungsnuten (8, 9) in weiten Bereichen parallel verlaufen, jedoch nicht im Bereich der Montageposition (M), wobei die äußere Führungsnut (8) eine stetige Kurve von 180° beschreibt und die innere Führungsnut (9) bei Annäherung an die Montageposition (M) ihren Abstand zur äußeren Führungsnut (8) verringert und im Bereich der Montageposition (M) eine relativ spitze Kehre von 180° beschreibt, wobei der geringste Abstand der beiden Führungsnuten (8, 9) in dem Bereich besteht, in dem der das zu montierende Werkstück tragende Werkstückträger (2) die Montageposition (M) erreicht, um ein Verschwenken der Lagerplatte (3) bei Erreichen der Montageposition (M) zu bewirken, wobei jede Lagerplatte (3) einen kreissegmentartigen Schlitz (4) aufweist, in dem ein Führungsstift (7) angeordnet ist, der in der äußeren Führungsnut (8) läuft und jede Lagerplatte (3) einen zweiten Führungsstift (6) aufweist, der in der inneren Führungsnut (9) läuft.

2. Montagevorrichtung nach Anspruch 1, **dadurch gekennzeichnet, dass**
der Werkstückträger (2) oder die Lagerplatte (3) in der Montageposition (M) mittels einer Fixiereinrichtung (11, 12, 13) fixierbar sind.

3. Montagevorrichtung nach Anspruch 2, **dadurch gekennzeichnet, dass**
die Fixiereinrichtung (11, 12, 13, 14) zumindest ein Element umfasst, das bei Erreichen der Montageposition (M) eine Druckkraft auf den Werkstückträger (2) oder die Lagerplatte (3) ausübt.

4. Montagevorrichtung nach Anspruch 2 oder 3, **dadurch gekennzeichnet, dass**
die Fixiereinrichtung (11, 12, 13, 14) ein federbelastetes, verschiebliches Andruckelement (13) und/oder ein blattfederartiges Andruckelement (14) aufweist.

5. Montagevorrichtung nach einem der Ansprüche 1 bis 4, **dadurch gekennzeichnet, dass**
die Lagerplatten (3) miteinander verbunden sind.

6. Montagevorrichtung nach Anspruch 5, **dadurch gekennzeichnet, dass**
eine Verschwenkeinrichtung einen bestimmten Verschwenkwinkel zwischen den Lagerplatten (3) gestattet.

7. Montagevorrichtung nach einem der Ansprüche 1 bis 6, **dadurch gekennzeichnet, dass**
der Antrieb der Lagerplatten (3) über einen Kette oder einen Riemen erfolgt.

8. Montagevorrichtung nach Anspruch 7, **dadurch gekennzeichnet, dass**
die Kette oder der Riemen von einer Antriebsscheibe angetrieben wird, die über einen Vorsprung oder eine Ausnehmung verfügt, mit der formschlüssig ein Antriebselement in Eingriff bringbar ist.

9. Montagevorrichtung nach Anspruch 14, **dadurch gekennzeichnet, dass**
die Antriebsscheibe auf der Unterseite der Kassette (1) vorgesehen ist.

10. Montagevorrichtung nach Anspruch 8 oder 9, **dadurch gekennzeichnet, dass**
das Antriebselement vorstehend angeordnet ist und bei Aufsetzen der Kassette (1) mit der Antriebsscheibe in Eingriff kommt.

11. Montagevorrichtung nach einem der Ansprüche 1 bis 17, **dadurch gekennzeichnet, dass**
der Antrieb eine Antriebswelle mit einem Vor- oder Rücksprung aufweist.

12. Montagevorrichtung nach einem der Ansprüche 7 bis 11, **dadurch gekennzeichnet, dass**
der Antrieb schrittweise über einen bestimmten Drehwinkel erfolgt.

13. Montagevorrichtung nach Anspruch 12, **dadurch gekennzeichnet, dass**
der Antrieb manuell oder automatisch steuerbar ist.

14. Montagevorrichtung nach Anspruch 12 oder 13, **dadurch gekennzeichnet, dass**
der Antrieb über einen Fußschalter gestartet wird.

15. Montagevorrichtung nach einem der Ansprüche 1 bis 14, **dadurch gekennzeichnet, dass**
die Werkstückträger (2) ringartig ausgebildet sind und das darin befindliche Werkstück zumindest in der Montageposition (M) von unten zugänglich ist.

16. Montagevorrichtung nach einem der Ansprüche 1 bis 15, **dadurch gekennzeichnet, dass**
eine Festlegung der Kassette (1) auf einer Ebene über mindestens zwei Passpunkte erfolgt.

17. Montagevorrichtung nach einem der Ansprüche 1 bis 16, **dadurch gekennzeichnet, dass**
die Kassette (1) zwanzig oder fünfzig Werkstückträger (2) aufnimmt.

## Claims

1. Installation device for installing assemblies, with a cassette (1), which comprises a multiplicity of workpiece carriers (2) which are each movable into an installation position (M) by means of a drive, wherein
the workpiece carriers (2) are arranged on a bearing plate (3), the bearing plate being guided displaceably in a guide (8, 9), **characterized in that**
the guide has two guide grooves (8, 9) which are each in engagement with an engagement section of the bearing plate (3), wherein
the guide grooves (8, 9) run parallel in large regions, but not in the region of the installation position (M), wherein the outer guide groove (8) describes a continuous curve of 180° and the inner guide groove (9) on approaching the installation position (M) reduces its distance from the outer guide groove (8) and, in the region of the installation position (M), describes a relatively acute bend of 180°, wherein the smallest distance between the two guide grooves (8, 9) exists in the region in which the workpiece carrier (2) carrying the workpiece to be installed reaches the installation position (M), in order to bring about pivoting of the bearing plate (3) on reaching the installation position (M), wherein each bearing plate (3) has a slot (4) which is in the manner of a circular segment and in which a guide pin (7) running in the outer guide groove (8) is arranged, and each bearing plate (3) has a second guide pin (6) which runs in the inner guide groove (9).

2. Installation device according to Claim 1, **characterized in that**
the workpiece carrier (2) or the bearing plate (3) can be fixed in the installation position (M) by means of a securing means (11, 12, 13).

3. Installation device according to Claim 2, **characterized in that**
the securing means (11, 12, 13, 14) comprises at least one element which, when the installation position (M) is reached, exerts a compressive force on the workpiece carrier (2) or the bearing plate (3).

4. Installation device according to Claim 2 or 3, **characterized in that**
the securing means (11, 12, 13, 14) has a springloaded displaceable press-on element (13) and/or a press-on element (14) in the manner of a leaf spring.

5. Installation device according to one of Claims 1 to 4, **characterized in that**
the bearing plates (3) are connected to one another.

6. Installation device according to Claim 5, **characterized in that**
a pivoting means permits a certain pivoting angle between the bearing plates (3).

7. Installation device according to one of Claims 1 to 6, **characterized in that**
the bearing plates (3) are driven via a chain or a belt.

8. Installation device according to Claim 7, **characterized in that**
the chain or the belt is driven by a drive disc which has a projection or a recess with which a drive element can be brought into engagement in a form-fitting manner.

9. Installation device according to Claim 14, **characterized in that**
the drive disc is provided on the underside of the cassette (1).

10. Installation device according to Claim 8 or 9, **characterized in that**
the drive element is arranged in a protruding manner and, when the cassette (1) is placed thereon, comes into engagement with the drive disc.

11. Installation device according to one of Claims 1 to 17, **characterized in that**
the drive has a drive shaft with a projection or offset.

12. Installation device according to one of Claims 7 to 11, **characterized in that**
the drive takes place incrementally over a certain angle of rotation.

13. Installation device according to Claim 12, **characterized in that**
the drive is manually or automatically controllable.

14. Installation device according to Claim 12 or 13, **characterized in that**
the drive is started via a foot switch.

15. Installation device according to one of Claims 1 to 14, **characterized in that**
the workpiece carriers (2) are of annular design and the workpiece located therein is accessible from below at least in the installation position (M).

16. Installation device according to one of Claims 1 to 15, **characterized in that**
the cassette (1) is fixed on a plane via at least two alignment points.

17. Installation device according to one of Claims 1 to 16, **characterized in that**
the cassette (1) accommodates twenty or fifty workpiece carriers (2).

## Revendications

1. Dispositif de montage pour le montage de modules comprenant une cassette (1) qui comprend une pluralité de supports de pièces (2) qui peuvent être déplacés au moyen d'un entraînement dans une position de montage respective (M),
les supports de pièces (2) qui sont guidés de manière déplaçable dans un guide (8, 9) étant disposés sur une plaque de palier (3), **caractérisé en ce que**
le guide présente deux rainures de guidage (8, 9) qui sont chacune en prise avec une portion d'engagement de la plaque de palier (3),
les rainures de guidage (8, 9) s'étendant parallèlement dans des régions larges mais pas dans la région de la position de montage (M), la rainure de guidage extérieure (8) décrivant une courbe constante de 180° et la rainure de guidage intérieure (9), lors du rapprochement de la position de montage (M), diminuant sa distance par rapport à la rainure de guidage extérieure (8) et décrivant, dans la région de la position de montage (M), un virage relativement serré de 180°, la plus petite distance entre les deux rainures de guidage (8, 9) existant dans la région dans laquelle le support de pièce (2) portant la pièce montée atteint la position de montage (M) afin de provoquer un pivotement de la plaque de palier (3) lorsqu'elle atteint la position de montage (M), chaque plaque de palier (3) présentant une fente de type en arc de cercle (4) dans laquelle est disposée une goupille de guidage (7) qui passe dans la rainure de guidage extérieure (8) et chaque plaque de palier (3) présentant une deuxième goupille de guidage (6) qui passe dans la rainure de guidage intérieure (9).

2. Dispositif de montage selon la revendication 1,
**caractérisé en ce que**
le support de pièce (2) ou la plaque de palier (3) peut être fixé(e) dans la position de montage (M) au moyen d'un dispositif de fixation (11, 12, 13).

3. Dispositif de montage selon la revendication 2,
**caractérisé en ce que**
le dispositif de fixation (11, 12, 13, 14) comprend au moins un élément qui, une fois que la position de montage (M) est atteinte, exerce une force de compression sur le support de pièce (2) ou sur la plaque de palier (3).

4. Dispositif de montage selon la revendication 2 ou 3,
**caractérisé en ce que**
le dispositif de fixation (11, 12, 13, 14) présente un élément de pressage (13) déplaçable, sollicité par ressort, et/ou un élément de pressage (14) de type ressort à lame.

5. Dispositif de montage selon l'une quelconque des revendications 1 à 4,
**caractérisé en ce que**
les plaques de palier (3) sont connectées les unes aux autres.

6. Dispositif de montage selon la revendication 5,
**caractérisé en ce que**
un dispositif de pivotement permet un angle de pivotement déterminé entre les plaques de palier (3).

7. Dispositif de montage selon l'une quelconque des revendications 1 à 6,
**caractérisé en ce que**
l'entraînement des plaques de palier (3) s'effectue par le biais d'une chaîne ou d'une courroie.

8. Dispositif de montage selon la revendication 7,
**caractérisé en ce que**
la chaîne ou la courroie est entraînée par un disque d'entraînement qui dispose d'une saillie ou d'un évidement avec laquelle ou lequel un élément d'entraînement peut être amené en prise par engagement par correspondance de formes.

9. Dispositif de montage selon la revendication 14,
**caractérisé en ce que**
le disque d'entraînement est prévu sur le côté inférieur de la cassette (1).

10. Dispositif de montage selon la revendication 8 ou 9,
**caractérisé en ce que**
l'élément d'entraînement est disposé en saillie et vient en prise avec le disque d'entraînement lors du positionnement de la cassette (1).

11. Dispositif de montage selon l'une quelconque des revendications 1 à 17,
**caractérisé en ce que**
l'entraînement présente un arbre d'entraînement avec une saillie ou un renfoncement.

12. Dispositif de montage selon l'une quelconque des revendications 7 à 11,
**caractérisé en ce que**
l'entraînement s'effectue pas à pas par un angle de rotation déterminé.

13. Dispositif de montage selon la revendication 12,
**caractérisé en ce que**
l'entraînement peut être commandé manuellement ou automatiquement.

14. Dispositif de montage selon la revendication 12 ou 13,
**caractérisé en ce que**
l'entraînement est lancé par le biais d'un interrupteur à pédale.

15. Dispositif de montage selon l'une quelconque des revendications 1 à 14,
**caractérisé en ce que**
les supports de pièces (2) sont réalisés sous forme annulaire et la pièce se trouvant à l'intérieur de ceux-ci est accessible par le dessous au moins dans la position de montage (M).

16. Dispositif de montage selon l'une quelconque des revendications 1 à 15,
**caractérisé en ce**
**qu'**une fixation de la cassette (1) sur un plan s'effectue par le biais d'au moins deux points de référence.

17. Dispositif de montage selon l'une quelconque des revendications 1 à 16,
**caractérisé en ce que**
la cassette (1) reçoit vingt ou cinquante supports de pièces (2).
